# EUROPEAN PATENT APPLICATION

(11) **EP 4 550 508 A1**
(43) Date of publication of application: **07.05.2025**
(21) Application number: 23852769.1
(22) Date of filing: 13.07.2023
(51) Int. Cl.: H01M 10/0567, H01M 10/052, H01M 4/525, H01M 4/505, H01M 4/48

(54) **NON-AQUEOUS ELECTROLYTE FOR LITHIUM SECONDARY BATTERY AND LITHIUM SECONDARY BATTERY COMPRISING SAME**

(30) Priority: 08.08.2022 KR 20220098826; 12.07.2023 KR 20230090520
(71) Applicant: LG Energy Solution, Ltd., Seoul 07335 (KR)
(72) Inventor: PARK, Sung Guk, Daejeon 34122 (KR); LEE, Chul Haeng, Daejeon 34122 (KR); LEE, Jung Hoon, Daejeon 34122 (KR)
(74) Representative: Hoffmann Eitle
(86) International application number: PCT/KR2023/010050
(87) International publication number: WO 2024/034887

(57) **Abstract**

The present invention relates to a non-aqueous electrolyte solution for a lithium secondary battery, which includes a compound represented by Formula 1, a lithium salt, and an organic solvent; and a lithium secondary battery including the same.

## Description

### TECHNICAL FIELD

This application claims priority from Korean Patent Application Nos. 10-2022-0098826, filed on August 8, 2022, and 10-2023-0090520, filed on July 12, 2023, the disclosures of which are incorporated by reference herein.

The present invention relates to a non-aqueous electrolyte solution for a lithium secondary battery and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte solution that becomes a medium for transferring the lithium ions is injected thereinto and the battery case is then sealed.

Since the lithium secondary battery may be miniaturized and has high energy density and working voltage, it is being used in various fields such as mobile devices, electronic products, and electric vehicles. As the field of application of the lithium secondary battery is diversified, physical property conditions required are also gradually increasing, and, specifically, development of a lithium secondary battery, which may be stably operated even under high-temperature conditions and has long life characteristics, is required.

In a case in which the lithium secondary battery is operated under high-temperature conditions, a reaction, in which PF₆⁻ anions are decomposed from a lithium salt, such as LiPF₆, contained in the electrolyte solution, may be intensified to generate a Lewis acid such as PF₅, and this reacts with moisture to generate HF. Decomposition products, such as PF₅ and HF, may not only destroy a film formed on a surface of the electrode, but also may cause a decomposition reaction of an organic solvent and may react with a decomposition product of the positive electrode active material to dissolve transition metal ions, and the dissolved transition metal ions may be electrodeposited on the negative electrode to destroy a film formed on the surface of the negative electrode.

Since performance of the battery is further degraded if the electrolyte decomposition reaction continues on the destroyed film as described above, there is a need to develop a secondary battery capable of maintaining excellent performance even under high-temperature conditions.

### DISCLOSURE OF THE INVENTION

### TECHNICAL PROBLEM

An aspect of the present invention provides a non-aqueous electrolyte solution, which contributes to form a strengthened film on an electrode, and a lithium secondary battery including the same.

### TECHNICAL SOLUTION

According to an aspect of the present invention, there is provided a non-aqueous electrolyte solution for a lithium secondary battery which includes: a lithium salt; an organic solvent; and a compound represented by Formula 1.

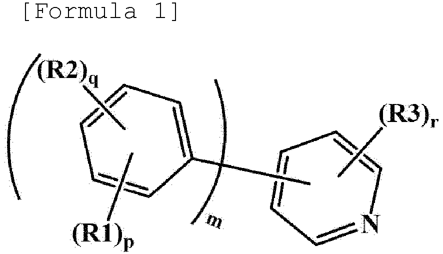

In Formula 1,
R1 is a halogen group,
R2 and R3 are each independently an alkyl group having 1 to 10 carbon atoms,
p is an integer of any one of 1 to 5,
q is an integer of any one of 0 to 5-p,
r is an integer of any one of 0 to 4, and
m is an integer of any one of 1 to 5-r.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte solution for a lithium secondary battery.

### ADVANTAGEOUS EFFECTS

Since a non-aqueous electrolyte solution according to the present invention has an effect of forming a thin and robust film on an electrode by including a pyridine-based compound substituted with halobenzene, it may eventually provide a lithium secondary battery with improved electrochemical properties even under high-temperature storage conditions.

### MODE FOR CARRYING OUT THE INVENTION

Hereinafter, the present invention will be described in more detail.

In general, anions included in a lithium salt, such as LiPF₆, which is widely used in an electrolyte solution for a lithium secondary battery, form decomposition products, such as hydrogen fluoride (HF) and PF₅, due to thermal decomposition or moisture. These decomposition products have acidic properties and deteriorate a film or electrode surface in the battery.

Transition metals in a positive electrode are easily dissolved into the electrolyte solution due to the decomposition products of the electrolyte solution and structural changes of the positive electrode according to repeated charge and discharge, and the dissolved transition metals are re-deposited on the positive electrode to increase resistance of the positive electrode. In addition, in a case in which the dissolved transition metals move to a negative electrode through the electrolyte solution, the dissolved transition metals are electrodeposited on the negative electrode to cause destruction of a solid electrolyte interphase (SEI) film and an additional electrolyte decomposition reaction, and, as a result, problems, such as consumption of lithium ions and an increase in resistance, occur.

Furthermore, a protective film is formed on the positive electrode and the negative electrode by an electrolyte solution reaction during initial activation of the battery, wherein, in a case in which the film becomes unstable for the above reason, additional decomposition of the electrolyte solution occurs during charge-discharge or high-temperature exposure to promote degradation of the battery and generate gas.

In order to solve these problems, the present inventors included the compound represented by Formula 1 in the non-aqueous electrolyte solution, and, accordingly, found that a decomposition reaction of the electrolyte solution may be reduced and the dissolution of transition metal and the gas generation may be suppressed. Specifically, since the compound represented by Formula 1 includes a pyridine group, it is quickly decomposed in the negative electrode to form a thin and robust SEI film on the electrode, and thus, there is an effect of improving initial resistance when it is used in a battery. Particularly, since the pyridine group is substituted with halobenzene, specifically, fluorobenzene, a LiF film may be formed through provision of a fluorine (F) component, and thus, it has an effect of suppressing degradation of the negative electrode during battery operation and eventually has an effect of reducing a gas generation amount and a resistance increase rate under high-temperature storage conditions.

In a case in which a silicon-based material is used as a negative electrode active material, there is a problem in that film formation is difficult due to its low electronic conductivity, wherein, since the compound represented by Formula 1 may react quickly, it may compensate for this problem. Also, in a case in which a high-nickel (high-Ni) active material is introduced as a positive electrode active material, it may be a factor that degrades lifetime of the battery by increasing a side reaction and the gas generation amount due to structural instability, wherein, since the compound represented by Formula 1 has an excellent effect of improving film properties of the electrode, it may solve problems caused by the usage of the high-nickel positive electrode active material.

Hereinafter, each component constituting the present invention will be described in more detail.

### Non-aqueous Electrolyte Solution

The present invention provides a non-aqueous electrolyte solution for a lithium secondary battery which includes: a lithium salt; an organic solvent; and a compound represented by Formula 1.

Hereinafter, each component will be described in detail.

### (1) Compound Represented by Formula 1

The non-aqueous electrolyte solution of the present invention includes a compound represented by Formula 1 below.

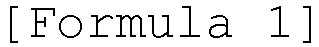

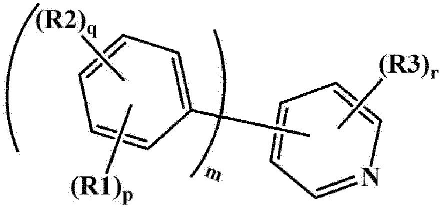

In Formula 1,
R1 is a halogen group,
R2 and R3 are each independently an alkyl group having 1 to 10 carbon atoms,
p is an integer of any one of 1 to 5,
q is an integer of any one of 0 to 5-p,
r is an integer of any one of 0 to 4, and
m is an integer of any one of 1 to 5-r.

In an embodiment of the present invention, R1 in Formula 1 may be fluorine. In this case, there is an effect of forming a film of LiF component on a negative electrode through removal of fluorine (F).

R2 and R3 may be hydrogen or an alkyl group having 1 to 5 carbon atoms, preferably hydrogen or an alkyl group having 1 to 3 carbon atoms, and more preferably hydrogen or a methyl group.

In an embodiment of the present invention, p may be 1 or 2, preferably, 1.

In an embodiment of the present invention,

q and r each may be 0 or 1, and preferably, one of them is 0 and another is 1, or both may be 0. Also, m may be 1 or 2, preferably, 1.

In an embodiment of the present invention, the compound represented by Formula 1 may be represented by Formula 1-1. As described above, in a case in which halobenzene is substituted at a 4-position of a pyridine ring, that is, a para-position with a nitrogen atom, it is desirable in that it easily reacts with the negative electrode because steric hindrance is not generated at a nitrogen (N) moiety of pyridine.

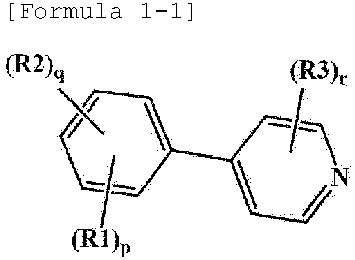

In Formula 1-1,
R1 to R3, p, q, and r are as defined in Formula 1.

In an embodiment of the present invention, Formula 1 may be represented by Formula 1A, 1B, or 1C below.

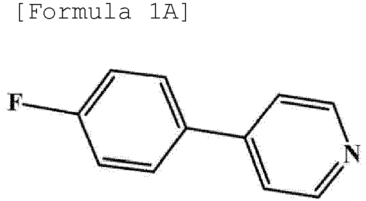

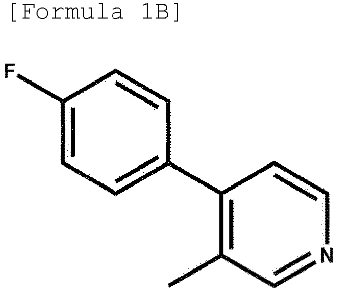

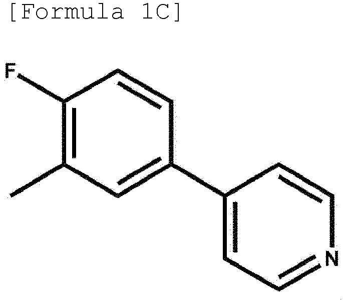

In an embodiment of the present invention, an amount of the compound represented by Formula 1 may be in a range of 0.1 wt% to 5 wt%, preferably 0.1 wt% to 1 wt%, and more preferably 0.1 wt% to 0.5 wt% based on a total weight of the non-aqueous electrolyte solution.

When the amount of the compound represented by Formula 1 is 0.1 wt% or more, the above-described effect may be sufficiently achieved by forming a film on the negative electrode, and, when the amount is 5 wt% or less, it is desirable in that a decrease in ionic conductivity due to an increase in viscosity of the electrolyte solution is prevented.

### (2) Additive

In order to prevent the electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution of the present invention may optionally further include the following additives, if necessary.

The additive may be at least one selected from the group consisting of a cyclic carbonate-based compound, a sultone-based compound, a sulfate-based compound, a phosphorus-based compound, a nitrile-based compound, an amine-based compound, a silane-based compound, a benzene-based compound, and a lithium salt-based compound.

The cyclic carbonate-based compound may be at least one selected from the group consisting of vinylene carbonate (VC), vinyl ethylene carbonate (VEC), and fluoroethylene carbonate (FEC), and may specifically be vinylene carbonate.

The sultone-based compound is a material capable of forming a stable SEI film by a reduction reaction on the surface of the negative electrode, wherein the sultone-based compound may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone, and may specifically be 1,3-propane sultone (PS).

The sulfate-based compound is a material which may be electrically decomposed on the surface of the negative electrode to form a stable SEI film that does not crack even during high-temperature storage, wherein the sulfate-based compound may be at least one selected from the group consisting of ethylene sulfate (Esa), trimethylene sulfate (TMS), or methyl trimethylene sulfate (MTMS).

The phosphorus-based compound may be a phosphate-based or phosphite-based compound, and specifically, may be at least one selected from the group consisting of tris(trimethylsilyl)phosphate, tris(trimethylsilyl)phosphite, tris(2,2,2-trifluoroethyl)phosphate, and tris(trifluoroethyl)phosphite.

The nitrile-based compound may be at least one selected from the group consisting of succinonitrile (SN), adiponitrile (ADN), acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether (ASA3), 1,3,6-hexanetricarbonitrile (HTCN), 1,4-dicyano 2-butene (DCB), and 1,2,3-tris(2-cyanoethyl)propane (TCEP).

The amine-based compound may be at least one selected from the group consisting of triethanolamine and ethylenediamine, and the silane-based compound may be tetravinylsilane.

The benzene-based compound may be at least one selected from the group consisting of monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from the group consisting of lithium difluorophosphate (LiDFP; LiPO₂F₂), lithium bis(oxalato)borate (LiBOB; LiB(C₂O₄)₂), lithium tetrafluoroborate (LiBF₄), lithium tetraphenylborate, and lithium difluorobis(oxalato)phosphate (LiDFOP).

Preferably, the non-aqueous electrolyte solution according to an embodiment of the present invention may further include at least one additive selected from the group consisting of vinylene carbonate (VC), 1,3-propane sultone (PS), ethylene sulfate (ESa), and lithium difluorophosphate (LiDFP), and may more preferably include vinyl ethylene carbonate (VEC). In this case, there is an advantage in that the negative electrode film may be strengthened and the resistance may be further improved.

An amount of the additive may be in a range of 0.1 wt% to 10 wt%, preferably, 0.3 wt% to 5 wt% based on the total weight of the non-aqueous electrolyte solution. When the amount of the additive is within the above range, there is an effect of suppressing a side reaction through film formation on the positive electrode and the negative electrode.

### (3) Organic Solvent

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, may preferably include a mixture of at least two selected from the group consisting of a cyclic carbonate-based solvent, a linear carbonate-based solvent, and a linear ester-based solvent, and may more preferably include a mixture of a cyclic carbonate-based solvent and a linear carbonate-based solvent.

The cyclic carbonate-based solvent may well dissociate a lithium salt in the electrolyte due to high permittivity as a highly viscous organic solvent, wherein the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, preferably, may include ethylene carbonate (EC) or propylene carbonate (PC).

Also, the linear carbonate-based solvent is an organic solvent having low viscosity and low permittivity, wherein the linear carbonate-based solvent may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may preferably include ethyl methyl carbonate (EMC), dimethyl carbonate (DMC), or diethyl carbonate (DEC).

In order to prepare an electrolyte solution having high ionic conductivity, it is desirable that a mixture of the cyclic carbonate-based solvent and the linear carbonate-based solvent is used as the organic solvent.

The linear ester-based solvent may be at least one selected from the group consisting of methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from the group consisting of γ-butyrolactone, γ-valerolactone, γ-caprolactone, σ-valerolactone, and ε-caprolactone.

The nitrile-based solvent may be at least one selected from the group consisting of succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

A remainder excluding other components except for the organic solvent, for example, the amounts of the compound represented by Formula 1, the additive, and the lithium salt, in the total weight of the non-aqueous electrolyte solution may all be the organic solvent unless otherwise stated.

### (4) Lithium Salt

The non-aqueous electrolyte solution of the present invention includes a lithium salt.

Any lithium salt typically used in an electrolyte solution for a lithium secondary battery may be used as the lithium salt without limitation, and, specifically, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may be at least one selected from the group consisting of LiPF₆, LiClO₄, LiBF₄, lthium bis (fluorosulfonyl) imide (LiN(FSO₂)₂; LiFSI), lithium bis(trifluoromethanesulfonyl)imide (LiTFSI), lithium bis(pentafluoroethanesulfonyl)imide (LiBETI), lithium trifluoromethanesulfonate (LiSO₃CF₃), lithium difluorophosphate (LiPO₂F₂), lithium bis (oxalate)borate (LiBOB), lithium difluoro(oxalate)borate (LiFOB), lithium difluoro (bisoxalato)phosphate (LiDFOP), lithium tetrafluoro(oxalate)phosphate (LiTFOP), and lithium fluoromalonato(difluoro)borate (LiFMDFB), and may preferably be LiPF₆.

In an embodiment of the present invention, a concentration of the lithium salt in the non-aqueous organic solution containing the lithium salt and the organic solvent may be in a range of 0.5 M to 4.0 M, particularly 0.5 M to 3.0 M, and more particularly 0.8 M to 2.0 M. When the concentration of the lithium salt is within the above range, adequate electrolyte impregnability may be obtained by preventing excessive increases in viscosity and surface tension while sufficiently securing an effect of improving low-temperature output and improving cycle characteristics.

### Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and a non-aqueous electrolyte solution. In this case, the non-aqueous electrolyte solution is the above-described non-aqueous electrolyte solution according to the present invention. Since the non-aqueous electrolyte solution has been described above, a description thereof will be omitted and other components will be described below.

### (1) Positive Electrode

The positive electrode according to the present invention includes a positive electrode active material, and may be prepared by coating a positive electrode collector with a positive electrode slurry including the positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel; aluminum; nickel; titanium; fired carbon; or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from the group consisting of LCO (LiCoO₂); LNO(LiNiO₂); LMO(LiMnO₂); LiMn₂O₄; LiCoPO₄; LFP(LiFePO₄); and a lithium composite transition metal oxide containing nickel (Ni), cobalt (Co), and manganese (Mn).

The positive electrode active material may have a molar ratio of nickel among transition metals of 70 mol% or more, preferably 80 mol% or more, and more preferably 90 mol% or more. That is, even in a battery including an ultra-high nickel positive electrode active material having a molar ratio of nickel of 90 mol% or more, excellent resistance characteristics and gas generation amount may be obtained when the non-aqueous electrolyte solution according to the present invention is used.

In an embodiment of the present invention, the lithium composite transition metal oxide may be a compound represented by Formula 2 below. That is, the positive electrode active material according to an embodiment of the present invention may include a lithium composite transition metal oxide represented by Formula 2 below.

[Formula 2] Li₁₊ₓ(NiₐCo_{b}Mn_{c}M_{d})O₂

In Formula 2,
M is at least one selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and
1+x, a, b, c, and d are atomic fractions of each independent elements,
wherein -0.2≤x≤0.2, 0.6≤a<1, 0<b≤0.3, 0<c≤0.3, 0≤d≤0.1, and a+b+c+d=1.

1+x represents a molar ratio of lithium in the lithium composite transition metal oxide, wherein x may satisfy - 0.1≤x≤0.2 or 0≤x≤0.2. When the molar ratio of the lithium satisfies the above range, a crystal structure of the lithium composite transition metal oxide may be stably formed.

a represents a molar ratio of nickel among total metals excluding lithium in the lithium composite transition metal oxide, wherein a may satisfy 0.70≤a<1, 0.80≤a<1, 0.85≤a<1, or 0.90≤a<1. When the molar ratio of the nickel satisfies the above range, since high energy density may be exhibited, high capacity may be achieved.

b represents a molar ratio of cobalt among the total metals excluding lithium in the lithium composite transition metal oxide, wherein b may satisfy 0<b≤0.25, 0<b≤0.20, 0<b≤0.15, or 0<b≤0.10. When the molar ratio of the cobalt satisfies the above range, good resistance characteristics and output characteristics may be achieved.

c represents a molar ratio of manganese among the total metals excluding lithium in the lithium composite transition metal oxide, wherein c may satisfy 0<c≤0.25, 0<c≤0.20, 0<c≤0.15, or 0<c≤0.10. When the molar ratio of the manganese satisfies the above range, structural stability of the positive electrode active material is excellent.

In an embodiment of the present invention, the lithium composite transition metal oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and may preferably include Al as the doping element. In other words, d representing a molar ratio of the doping element among the total metals excluding lithium in the lithium composite transition metal oxide may satisfy 0<d≤0.10, 0<d≤0.08, 0<d≤0.05, or 0<d≤0.03.

Preferably, a, b, c, and d in Formula 2 may satisfy 0.70≤a<1, 0<b≤0.2, 0<c≤0.2, and 0≤d≤0.1, more preferably, 0.80≤a<1, 0<b≤0.15, 0<c≤0.15, and 0≤d≤0.05, respectively.

The positive electrode active material may be included in an amount of 80 wt% to 99 wt%, specifically, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

Also, the conductive agent is a material providing conductivity without causing adverse chemical changes in the battery, wherein it may be added in an amount of 0.5 wt% to 20 wt% based on the total weight of the solid content in the positive electrode slurry.

The conductive agent, for example, may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as fluorocarbon powder, aluminum powder, and nickel powder; conductive whiskers such as zinc oxide whiskers and potassium titanate whiskers; conductive metal oxide such as titanium oxide; and polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 40 wt% to 90 wt%, preferably, 50 wt% to 80 wt%.

### (2) Negative Electrode

The negative electrode according to the present invention includes a negative electrode active material, and may be prepared by coating a negative electrode collector with a negative electrode slurry including the negative electrode active material, a binder, a conductive agent, and a solvent, and then drying and rolling the coated negative electrode collector.

The negative electrode collector generally has a thickness of 3 µm to 500 µm. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; or an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

In an embodiment of the present invention, the negative electrode active material may include a silicon-based material, and the silicon-based material is at least one selected from the group consisting of Si, SiOₓ (0<x<2), and a Si-Y alloy (where Y is an element selected from the group consisting of alkali metal, alkaline earth metal, a Group 13 element, a Group 14 element, transition metal, a rare earth element, and a combination thereof, and may not be Si), and is preferably SiO.

Since the silicon-based negative electrode active material has capacity that is nearly 10 times higher than that of graphite, it may improve rapid charging performance of the battery by reducing a mass loading (mg·cm⁻²). However, with respect to a negative electrode containing the silicon-based negative electrode active material, there is a disadvantage in that it is difficult to form a film on the negative electrode due to lower electrical conductivity than a graphite negative electrode, wherein, since the non-aqueous electrolyte solution according to the present invention includes the compound represented by Formula 1, it is rapidly decomposed at the negative electrode due to a pyridine structure to form a thin and robust SEI film on the negative electrode, and thus, it may effectively compensate for the above disadvantage.

In an embodiment of the present invention, the silicon-based material may be included in an amount of 1 wt% to 20 wt%, preferably, 5 wt% to 15 wt% based on a total weight of the negative electrode active material. When the silicon-based material is included in the above range, there is an effect of increasing capacity of the negative electrode and improving the rapid charging performance.

Furthermore, in addition to the silicon-based material, the negative electrode active material may include at least one selected from a carbon material capable of reversibly intercalating/deintercalating lithium ions; metal or an alloy of lithium and the metal; a metal composite oxide; a material which may be doped and undoped with lithium; lithium metal; and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon), hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used.

In the Si-Y and Sn-Y, the element Y may be selected from the group consisting of Mg, Ca, Sr, Ba, Ra, Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), sulfur (S), selenium (Se), tellurium (Te), polonium (Po), and a combination thereof.

Examples of the transition metal oxide may be lithium-containing titanium composite oxide (LTO), vanadium oxide, and lithium vanadium oxide.

In an embodiment of the present invention, the negative electrode active material may be a mixture of the carbon-based material and the silicon-based material, and may preferably be a mixture of graphite and SiO.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The conductive agent is a component for further improving the conductivity of the negative electrode active material, wherein the conductive agent may be added in an amount of 0.5 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of a solid content in the slurry including the negative electrode active material, the binder, and the conductive agent is in a range of 30 wt% to 80 wt%, preferably, 40 wt% to 70 wt%.

### (3) Separator

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution and excellent safety as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as a hybrid electric vehicle (HEV) .

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); and a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### <Examples: Preparation of Lithium Secondary Batteries>

### Example 1.

### 1) Preparation of Non-aqueous Electrolyte Solution

After ethylene carbonate (EC):ethyl methyl carbonate (EMC) were mixed in a volume ratio of 30:70, a non-aqueous organic solution was prepared by dissolving LiPF₆ such that a concentration of the LiPF₆ was 1 M. 100 wt% of a non-aqueous electrolyte solution was prepared by mixing 0.1 wt% of the compound represented by Formula 1A, 0.5 wt% of vinylene carbonate (VC), and the non-aqueous organic solution as a remainder.

### 2) Preparation of Lithium Secondary Battery

Li(Ni_{0.9}Mn_{0.03}CO_{0.06}Al_{0.01})O₂ as a positive electrode active material, a conductive agent (carbon black), and a binder (polyvinylidene fluoride) were added in a weight ratio of 97.6:0.8:1.6 to N-methyl-2-pyrrolidone (NMP) to prepare a positive electrode slurry (solid content: 60 wt%). A 13.5 µm thick aluminum (Al) thin film, as a positive electrode collector, was coated with the positive electrode slurry, dried, and then roll-pressed to prepare a positive electrode.

A negative electrode active material (graphite:SiO = 90.0:10.0 weight ratio), a binder (SBR-CMC), and a conductive agent (carbon black) were added in a weight ratio of 97.6:0.8:1.6 to water, as a solvent, to prepare a negative electrode slurry (solid content: 60 wt%). A 6 µm thick copper (Cu) thin film, as a negative electrode collector, was coated with the negative electrode slurry, dried, and then roll-pressed to prepare a negative electrode. An electrode assembly was prepared by sequentially stacking the positive electrode, a polyolefin-based porous separator coated with inorganic particles (Al₂O₃), and the negative electrode.

The electrode assembly prepared was accommodated in a cylindrical battery case, and the above-prepared non-aqueous electrolyte solution was injected thereinto to prepare a lithium secondary battery.

### Example 2.

A lithium secondary battery was prepared in the same manner as in Example 1 except that an amount of the compound represented by Formula 1A was changed to 0.3 wt% during the preparation of the non-aqueous electrolyte solution.

### Example 3.

A lithium secondary battery was prepared in the same manner as in Example 1 except that the compound represented by Formula 1B was used instead of the compound represented by Formula 1A during the preparation of the non-aqueous electrolyte solution.

### Example 4.

A lithium secondary battery was prepared in the same manner as in Example 3 except that an amount of the compound represented by Formula 1B was changed to 0.3 wt% during the preparation of the non-aqueous electrolyte solution.

### Example 5.

A lithium secondary battery was prepared in the same manner as in Example 1 except that the compound represented by Formula 1C was used instead of the compound represented by Formula 1A during the preparation of the non-aqueous electrolyte solution.

### Example 6.

A lithium secondary battery was prepared in the same manner as in Example 5 except that an amount of the compound represented by Formula 1C was changed to 0.3 wt% during the preparation of the non-aqueous electrolyte solution.

### Comparative Example 1.

A lithium secondary battery was prepared in the same manner as in Example 1 except that the compound represented by Formula 1A was not added during the preparation of the non-aqueous electrolyte solution.

### Comparative Example 2.

A lithium secondary battery was prepared in the same manner as in Example 1 except that a compound represented by the following Formula Z1 was used instead of the compound represented by Formula 1A during the preparation of the non-aqueous electrolyte solution.

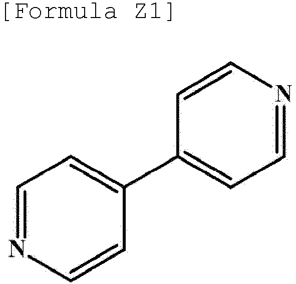

### Comparative Example 3.

A lithium secondary battery was prepared in the same manner as in Example 1 except that a compound represented by the following Formula Z2 was used instead of the compound represented by Formula 1A during the preparation of the non-aqueous electrolyte solution.

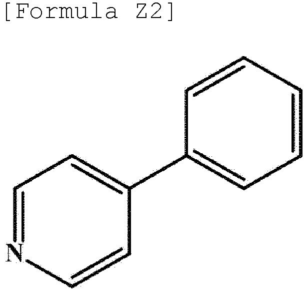

### Comparative Example 4.

A lithium secondary battery was prepared in the same manner as in Example 1 except that a compound represented by the following Formula Z3 was used instead of the compound represented by Formula 1A during the preparation of the non-aqueous electrolyte solution.

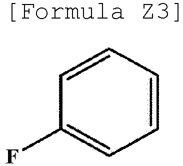

### Comparative Example 5.

A lithium secondary battery was prepared in the same manner as in Example 1 except that a compound represented by the following Formula Z4 was used instead of the compound represented by Formula 1A during the preparation of the non-aqueous electrolyte solution.

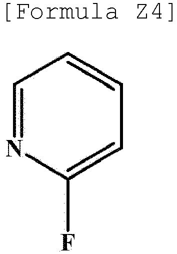

### <Experimental Examples: Battery Performance Evaluation>

### Experimental Example 1. Measurement of Initial Resistance

After a formation process was performed on the lithium secondary batteries prepared in the examples and the comparative examples, the lithium secondary batteries were constant current/constant voltage (CC/CV) charged (0.05 C cut off) at 0.33 C rate to 4.2 V at 25°C and were constant current (CC) discharged at 0.33 C rate to 2.80 V, and initial resistance was then measured. The results thereof are presented in Table 1 below.

### Experimental Example 2. Measurement of Resistance Increase Rate After High-temperature Storage

Each battery, in which initial evaluation of Experimental Example 1 had been completed, was fully charged to a state of charge (SOC) of 100% under the same conditions and stored at a high temperature (60°C) for 4 weeks. Thereafter, after each battery was transferred to a charger and discharger at room temperature (25°C), resistance was measured again, a resistance increase rate was calculated through Equation 1 below, and the results thereof are presented in Table 1 below. Resistance increase rate (%) = {(resistance after high-temperature storage - initial resistance)/initial resistance} × 100

### Experimental Example 3. Measurement of Gas Generation Amount After High-temperature Storage

After a formation process was performed on the lithium secondary batteries prepared in the examples and the comparative examples, the lithium secondary batteries were charged under constant current/constant voltage conditions (0.05 C cut off) at 0.33 C rate to 4.2 V at 25°C such that the lithium secondary batteries were fully charged to an SOC of 100%. After the fully-charged batteries were stored at 60°C for 4 weeks, a gas generation amount was measured using a buoyancy measurement method at room temperature (25°C). A relative gas generation amount of each battery was calculated when a gas generation amount measured in Comparative Example 1 was set as 100% and presented in Table 1 below.

**[Table 1]**

| | Formula 1 | | Experimen tal Example 1 | Experimen tal Example 2 | Experimen tal Example 3 |
|---|---|---|---|---|---|
| | Structure | Amount (wt%) | Initial resistanc e (mohm) | Resistanc e increase rate (%) | Gas generatio n amount (%) |
| Example 1 | 1A | 0.1 | 48.63 | 1.1 | 86.7 |
| Example 2 | 1A | 0.3 | 50.1 | 0.8 | 83.5 |
| Example 3 | 1B | 0.1 | 49.84 | 1.1 | 86.2 |
| Example 4 | 1B | 0.3 | 51 | 0.6 | 82.9 |
| Example 5 | 1C | 0.1 | 49.34 | 0.9 | 85.3 |
| Example 6 | 1C | 0.3 | 49.83 | 0.8 | 84.8 |
| Comparative Example 1 | - | - | 51.2 | 2.5 | 100 |
| Comparative Example 2 | Z1 | 0.1 | 48.78 | 3.4 | 92.9 |
| Comparative Example 3 | Z2 | 0.1 | 49.52 | 4.4 | 94.3 |
| Comparative Example 4 | Z3 | 0.1 | 51.5 | 2.3 | 98.9 |
| Comparative Example 5 | Z4 | 0.1 | 48.88 | 2.1 | 95.9 |

According to the results of Table 1, it may be confirmed that the non-aqueous electrolyte solution including the compound represented by Formula 1 was effective in improving the resistance increase rate and gas generation amount after high-temperature storage.

Specifically, it may be confirmed that the batteries of Examples 1 to 6 had better resistance increase rate and gas generation amount after high-temperature storage than Comparative Example 2 using the compound represented by Formula Z1 in which pyridine was substituted with pyridine instead of fluorobenzene, Comparative Example 3 using the compound represented by Formula Z2 in which unsubstituted benzene was substituted instead of fluorobenzene, Comparative Example 4 using the compound represented by Formula Z3 which was fluorobenzene, and Comparative Example 5 using the compound represented by Formula Z4 which was fluoropyridine. Particularly, with respect to Comparative Examples 2 and 3, since the compounds containing no F were used, LiF was not formed on the negative electrode, and thus, it may be confirmed that the resistance increase rate after high-temperature storage was not as good as that of Comparative Example 1.

Even if the non-aqueous electrolyte solution included the compound represented by Formula 1, in a case in which the amount thereof was 0.3 wt% or more based on a total weight of the non-aqueous electrolyte solution, it may be confirmed that an effect of improving the resistance increase rate and gas generation amount after high-temperature storage was more excellent.

## Claims

1. A non-aqueous electrolyte solution for a lithium secondary battery, comprising:
a lithium salt;
an organic solvent; and
a compound represented by Formula 1: 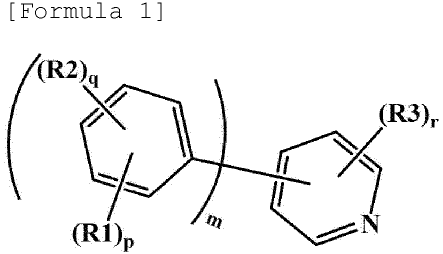 in Formula 1,
R1 is a halogen group,
R2 and R3 are each independently an alkyl group having 1 to 10 carbon atoms,
p is an integer of any one of 1 to 5,
q is an integer of any one of 0 to 5-p,
r is an integer of any one of 0 to 4, and
m is an integer of any one of 1 to 5-r.

2. The non-aqueous electrolyte solution for a lithium secondary battery of claim 1, wherein R1 is fluorine.

3. The non-aqueous electrolyte solution for a lithium secondary battery of claim 1, wherein q and r are each 0.

4. The non-aqueous electrolyte solution for a lithium secondary battery of claim 1, wherein the compound represented by Formula 1 is represented by Formula 1-1: 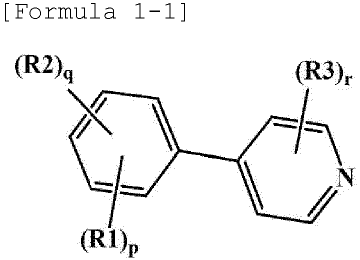 in Formula 1-1,
R1 to R3, p, q, and r are as defined in Formula 1.

5. The non-aqueous electrolyte solution for a lithium secondary battery of claim 1, wherein an amount of the compound represented by Formula 1 is in a range of 0.05 wt% to 5 wt% based on a total weight of the non-aqueous electrolyte solution.

6. The non-aqueous electrolyte solution for a lithium secondary battery of claim 1, wherein an amount of the compound represented by Formula 1 is in a range of 0.1 wt% to 1 wt% based on a total weight of the non-aqueous electrolyte solution.

7. The non-aqueous electrolyte solution for a lithium secondary battery of claim 1, further comprising at least one additive selected from the group consisting of vinylene carbonate, 1,3-propane sultone, ethylene sulfate, and lithium difluorophosphate.

8. The non-aqueous electrolyte solution for a lithium secondary battery of claim 1, wherein the organic solvent comprises a mixture of a cyclic carbonate-based solvent and a linear carbonate-based solvent.

9. A lithium secondary battery comprising:
a positive electrode including a positive electrode active material;
a negative electrode including a negative electrode active material;
a separator disposed between the positive electrode and the negative electrode; and
the non-aqueous electrolyte solution of claim 1.

10. The lithium secondary battery of claim 9, wherein the positive electrode active material comprises a lithium composite transition metal oxide represented by Formula 2:
[Formula 2] Li₁₊ₓ(NiₐCo_{b}Mn_{c}M_{d})O₂
in Formula 2,
M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are atomic fractions of each independent elements,
wherein -0.2≤x≤0.2, 0.6≤a<1, 0<b≤0.3, 0<c≤0.3, 0≤d≤0.1, and a+b+c+d=1.

11. The lithium secondary battery of claim 10, wherein a, b, c, and d in Formula 2 satisfy 0.80≤a<1, 0<b≤0.15, 0<c≤0.15, and 0≤d≤0.05, respectively.

12. The lithium secondary battery of claim 9, wherein the negative electrode active material comprises a silicon-based material.
